# EUROPÄISCHE PATENTSCHRIFT

(11) **EP 4 431 933 B1**
(45) Veröffentlichungstag und Bekanntmachung des Hinweises auf die Patenterteilung: **21.01.2026**
(21) Anmeldenummer: 23162327.3
(22) Anmeldetag: 16.03.2023
(51) Int. Cl.: G01N 29/02, G01N 29/24

(54) **SAW-SENSORMODUL**
SAW SENSOR MODULE
MODULE DE CAPTEUR SAW

(43) Veröffentlichungstag der Anmeldung: 18.09.2024
(73) Patentinhaber: Bio Saw GmbH, 01099 Dresden (DE)
(72) Erfinder: Zietzschmann, Steffen, 01561 Priestewitz / OT Gävernitz (DE); Ostertag, Thomas, 82538 Geretsried (DE)
(74) Vertreter: Steiniger, Carmen

(56) Entgegenhaltungen:
- WO-A1-2009/153189
- US-A1- 2005 022 581
- US-A1- 2012 085 644
- US-A1- 2017 299 493
- BENDER F ET AL: "IMPROVEMENT OF SURFACE ACOUSTIC WAVE GAS AND BIOSENSOR RESPONSE CHARACTERISTICS USING A CAPACITIVE COUPLING TECHNIQUE", ANALYTICAL CHEMISTRY, AMERICAN CHEMICAL SOCIETY, US, vol. 76, no. 13, 1 July 2004 (2004-07-01), pages 3837 - 3840, XP001209801, ISSN: 0003-2700, DOI: 10.1021/AC035019+

## Beschreibung

Die vorliegende Erfindung betrifft ein SAW-Sensormodul, das eine Kartusche mit einem Sensorchip aus piezoelektrischem Material und wenigstens einem darauf ausgebildeten SAW-Sensor und wenigstens ein Ansteuer- und Auslesegerät für den wenigstens einen SAW-Sensor aufweist.

Eine Surface Acoustic Wave (SAW) ist eine akustische Oberflächenwelle, d. h. eine Körperschallwelle, die sich planar auf einer Oberfläche, also nur in zwei Dimensionen, ausbreitet. SAW-Wellen dringen nur minimal in das Material, auf dem sie sich ausbreiten, ein, die Eindringtiefe ist auf eine Wellenlänge begrenzt.

Bei einem SAW-Sensor wird eine akustische Oberflächenwelle von einer auf einer Sensoroberfläche befindlichen Senderelektrode zu einer Empfängerelektrode gesendet. Dabei befindet sich zwischen Sender- und Empfängerelektrode die jeweilige selektive Rezeptorschicht auf einem piezoelektrischen Substrat.

Vorzugsweise werden als Sender und Empfänger metallische ineinandergreifende Kammstrukturen (sogenannte Interdigital Transducer - IDT) genutzt. Auf die eine Kammstruktur wird dann eine Wechselspannung gegeben, während die andere Kammstruktur auf Masse gelegt wird. Dadurch entsteht ein sich periodisch änderndes elektrisches Feld zwischen den unterschiedlich geladenen Fingern. Da bei dem piezoelektrischen Substrat ein von außen angelegtes elektrisches Feld dessen mechanische Deformation bewirkt, wird hierdurch das Substrat abwechselnd gestreckt und zusammengezogen.

Bei dem SAW-Sensor werden auf dem Sensorsubstrat zwei dieser IDTs nebeneinander aufgebracht. Dabei dient der eine IDT als Sender und der andere IDT als Empfänger. Am Sender wird das Wechselspannungssignal in eine akustische Oberflächenwelle umgewandelt und in das Substrat ausgesendet. Die akustische Oberflächenwelle bewirkt im piezoelektrischen Substrat Ladungsverschiebungen, die in den Fingerstrukturen des Empfängers ein Wechselspannungssignal erzeugen.

SAW-Sensoren können dabei als Verzögerungsleitung oder als Resonatoren betrieben werden. Bei letzterem Prinzip befinden sich jeweils auf den Außenseiten der IDTs Reflektorstrukturen.

Durch den jeweiligen Reflektor wird das jeweils eingestrahlte Funksignal als Echo reflektiert. Der Zeitabstand zwischen Ursprungssignal und Echo sowie die Änderung der Magnitude und der Phase des jeweiligen Signals hängen unter anderem von der Schallgeschwindigkeit des verwendeten Sensorsubstratmaterials, der Temperatur und von mechanischen Spannungen im Substrat ab. Es hat sich zudem gezeigt, dass sich Zeitabstand, Magnitude und Phase bei einem auf einer solchen Reflexion basierenden SAW-Sensor in Abhängigkeit von einer auf das Sensorsubstrat aufgebrachten und sich an die Substratoberfläche anbindenden Rezeptorschicht ändern. Durch die dabei bewirkte Massenanlagerung an die Sensoroberfläche wird eine Änderung der Oberflächenwellengeschwindigkeit hervorgerufen. Dieser Effekt wird beispielsweise in der biologischen oder chemischen Probenanalytik genutzt, um bestimmte Inhaltsstoffe von Fluiden ermitteln zu können. US2005/022581 A1 zeigt ein bekanntes SAW-Sensormodul.

Es ist die Aufgabe der vorliegenden Erfindung, eine praktikable Vorrichtung für eine einfache Analyse chemischer und/oder biologischer Fluide auf Basis von SAW-Sensoren zu schaffen. Diese Aufgabe wird erfindungsgemäß durch ein SAW-Sensormodul, das eine Kartusche mit einem Sensorchip aus piezoelektrischem Material und wenigstens einem darauf ausgebildeten SAW-Sensor und wenigstens ein Ansteuer- und Auslesegerät für den wenigstens einen SAW-Sensor aufweist, wobei das Ansteuer- und Auslesegerät eine Geräteplatine aufweist, auf deren Geräteplatinenvorderseite Gerätekoppelelektroden ausgebildet sind, die mittels durch die Geräteplatine durchführender elektrischer Leiter mit einem auf der Geräteplatine ausgebildeten Geräteanschluss verbunden sind, und die Kartusche Kartuschenkoppelelektroden aufweist, die einerseits mit den Gerätekoppelelektroden und andererseits mit Sensorelektroden des wenigstens einen SAW-Sensors jeweils kapazitiv gekoppelt sind, wobei auf der Geräteplatine wenigstens ein Magnetelement ausgebildet ist und die Kartusche wenigstens ein sich an dem wenigstens einen Magnetelement ausrichtendes, metallisches und/oder magnetisches Ausrichtungselement aufweist.

Das erfindungsgemäße SAW-Sensormodul weist ein variabel und dauerhaft einsetzbares Ansteuer- und Auslesegerät auf, das für eine Vielzahl an Messungen eingesetzt werden kann. Darüber hinaus weist das erfindungsgemäße SAW-Sensormodul eine Kartusche auf, die grundsätzlich nur einmal, d. h. als Wegwerfteil, zum Einsatz kommt. In dem SAW-Sensorbauteil der Kartusche erfolgt die probenabhängige Messung der Änderung der erzeugten akustischen Oberflächenwellen. Die Ansteuerung und Auslesung der dabei verwendeten SAW-Sensoren erfolgt durch das Ansteuer- und Auslesegerät.

Die Signalübertragung vom Ansteuer- und Auslesegerät zu der Kartusche und von dieser zurück zu dem Ansteuer- und Auslesegerät erfolgt bei der vorliegenden Erfindung einfach und verlustarm über eine kapazitive Kopplung zwischen dem Ansteuer- und Auslesegerät und der Kartusche. Dabei kommen zwei kapazitive Kopplungen zum Einsatz: Zum einen werden die Gerätekoppelelektroden den Kartuschenkoppelelektroden in sehr geringem Abstand zueinander einander gegenüber angeordnet und können dadurch einfach kapazitiv gekoppelt werden, und zum anderen werden die Kartuschenkoppelelektroden über das piezoelektrische Substrat mit den Sensorelektroden kapazitiv gekoppelt.

Die jeweiligen Elektroden sind dabei direkt übereinander angeordnet. Die Ausrichtung der Gerätekoppelelektroden zu den Kartuschenkoppelelektroden wird einfach bei der vorliegenden Erfindung dadurch erreicht, dass infolge der magnetischen Anziehung zwischen dem wenigstens einen Ausrichtungselement und dem wenigstens einen Magnetelement eine automatische Ausrichtung der Kartusche auf dem Ansteuer- und Auslesegerät erfolgt. Eine aufwändige Justage und Verdrahtung ist daher bei der vorliegenden Erfindung nicht nötig. Im Gegenteil: die Kartusche muss einfach nur auf das Ansteuer- und Auslesegerät aufgelegt werden, dreht sich von selbst in die richtige Stellung und die Auswertung kann beginnen. Diese Ausrichtung funktioniert sowohl in der Rotation als auch in der Translation. Nach erfolgter Ausrichtung liegt die Kartusche in allen Achsen stabil auf dem Ansteuer- und Auslesegerät.

In einer mechanisch besonders stabilen Ausführungsform der vorliegenden Erfindung weist die Kartusche eine zwischen dem Sensorchip und der Geräteplatine liegende Trägerplatine auf, auf der die Kartuschenkoppelelektroden ausgebildet sind. Die Trägerplatine bildet eine stabile Basis, an der vorteilhaft die Kartuschenkoppelelektroden ausgebildet werden können und auf der darüber hinaus vorteilhaft die Sensorchip und weitere Aufbauten der Kartusche, wie beispielsweise deren Gehäuse, aufgebaut werden können. Grundsätzlich können jedoch die Sensorelektroden des Sensorchips auch direkt mit den Gerätekoppelektroden der Geräteplatine kapazitiv gekoppelt werden.

Fluid lässt sich besonders leicht und sicher mit Hilfe des erfindungsgemäßen SAW-Sensormoduls analysieren, wenn auf dem SAW-Sensorbauteil ein Fluidrahmen aufgebaut ist, der ein Fluidbecken umschließt, und auf dem Sensorchip um den Fluidrahmen eine Kappe ausgebildet ist, wobei die Kappe und der Fluidrahmen die Sensorelektroden und Reflektoren des wenigstens einen SAW-Sensors abdecken. Durch das Fluidbecken wird erreicht, dass dann, wenn das SAW-Sensormodul mehrere SAW-Sensoren aufweist, die Laufstrecken bzw. Spuren aller dieser SAW-Sensoren gleich lang gestaltet werden können, was ein Differenzbildung zwischen den Signalen dieser SAW-Sensoren erleichtert.

Der Fluidrahmen bildet einen mechanisch besonders stabilen und dichten Rahmen um das Fluidbecken aus, wenn der Fluidrahmen eine einerseits in einer an der Kappe ausgebildeten Nut eingehängte und andererseits auf eine Sensorchipvorderseite des Sensorchips drückende und dort abgedichtete Hebelstruktur ist.

Das Fluidbecken lässt sich besonders leicht mit Fluid befüllen, wenn der Fluidrahmen einen schräge Wände aufweisenden Trichter auf dem wenigstens einen SAW-Sensor ausbildet oder auf den Fluidrahmen ein solcher Trichter aufgesetzt ist.

Die Kappe ist vorzugsweise ein Kunststoffspritzteil, durch das das wenigstens eine Ausrichtungselement verläuft. Somit kann die Kartusche mit hoher Reproduzierbarkeit in hohen Stückzahlen und damit preiswert hergestellt werden.

Solange das erfindungsgemäße SAW-Sensormodul noch nicht im Einsatz ist, kann der wenigstens eine SAW-Sensor besonders effektiv von äußeren Einflüssen geschützt werden, wenn über den Fluidrahmen eine Deckfolie laminiert ist.

Wenn die Kartusche mehrere streifenförmige, parallel zueinander angeordnete SAW-Sensoren aufweist, kann wenigstens einer dieser SAW-Sensoren als Referenzsensor genutzt werden. Beispielsweise kann dieser Referenzsensor ohne selektive Rezeptorschicht ausgebildet werden. Ferner kann einer dieser SAW-Sensoren genutzt werden, um Umwelt- oder Temperatureffekte zu kompensieren.

Sinnvoll ist es, wenn die in Kontakt zu einem zu analysierenden Fluid stehenden Teile der Laufstrecken von Mess- und Referenz-SAW-Sensor gleich lang sind.

Die SAW-Sensoren sind vorzugsweise mittels dazwischen befindlicher Trennwände voneinander getrennt.

Wenn wenigstens zwei der SAW-Sensoren unterschiedliche Laufstrecken aufweisen, können diese elektrisch parallel oder in Serie geschaltet werden und gemeinsam über eine Koppelstrecke ausgelesen werden. Signale dieser Sensoren können dann anhand ihrer Laufzeit mit einer Auswerteelektronik getrennt werden.

In einer weiteren vorteilhaften Ausführungsform der vorliegenden Erfindung ist jedem der SAW-Sensoren ein separater kapazitiver Anschluss zugeordnet. Damit können die SAW-Sensoren zeitgleich messen und ausgewertet werden, wodurch sich Messfehler reduzieren lassen.

Besonders günstig ist es, wenn auf dem Sensorchip und/oder der Trägerplatine wenigstens ein RFID-Chip ausgebildet ist, der über wenigstens eine kapazitive Kopplung mit dem Geräteanschluss verbunden ist. Mit dem RFID-Chip kann die Kartusche und die darin durchgeführte Fluidprobenbestimmung eineindeutig bestimmt und damit erfassten Messwerten zugeordnet werden, wobei die Datenübermittlung einfach über die wenigstens eine kapazitive Kopplung erfolgt.

Ein vorteilhafter Schutz des Ansteuer- und Auslesegerätes beispielsweise vor Schmutz oder Feuchtigkeit wird erzielt, wenn zwischen der Kartusche und dem Ansteuer- und Auslesegerät eine dielektrische Schutzmembran angeordnet ist. Eine solche Schutzmembran dient als Dielektrikum für die kapazitive Kopplung zwischen dem Ansteuer- und Auslesegerät und der Kartusche und beeinträchtigt diese nicht.

Bevorzugte Ausführungsformen der vorliegenden Erfindung, deren Aufbau, Funktion und Vorteile sind im Folgenden anhand von Figuren näher erläutert, wobei
- Figur 1: schematisch eine Ausführungsform eines erfindungsgemäßen SAW-Sensormoduls in einer Draufsicht zeigt;
- Figur 2: schematisch eine Geräteplatine des SAW-Sensormoduls aus Figur 1 in einer Draufsicht zeigt;
- Figur 3: schematisch einer Ausführungsform eines erfindungsgemäßen SAW-Sensormoduls in einer geschnittenen Seitenansicht zeigt;
- Figur 4: schematisch einen Teil eines Sensorchips, einer Kappe und eines Fluidbeckens einer Ausführungsform des erfindungsgemäßen SAW-Sensormoduls in einer geschnittenen Seitenansicht zeigt; und
- Figur 5: schematisch eine Draufsicht auf SAW-Sensoren einer Ausführungsform des erfindungsgemäßen SAW-Sensormoduls zeigt.

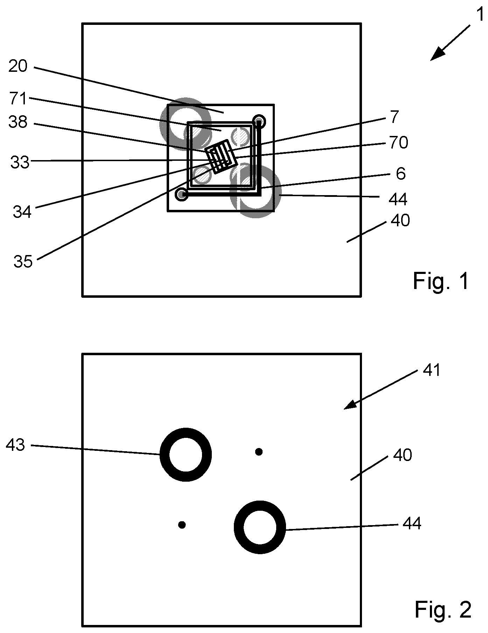

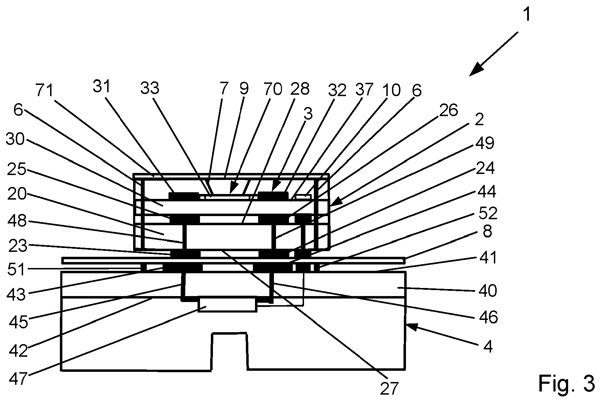

Figur 1 zeigt schematisch eine Ausführungsform eines erfindungsgemäßen SAW-Sensormoduls 1 in einer Draufsicht. Dabei sind verdeckte Strukturen des SAW-Sensormoduls 1 grau dargestellt. In Figur 3 ist eine Ausführungsform des erfindungsgemäßen SAW-Sensormoduls 1 schematisch in einer geschnittenen Seitenansicht dargestellt.

Das SAW-Sensormodul 1 weist ein in Figur 3 schematisch dargestelltes Ansteuer- und Auslesegerät 4 mit einer Geräteplatine 40 auf, die in Figur 2 einzeln in einer Draufsicht dargestellt ist. Die Geräteplatine 40 ist eine elektrisch nicht leitfähige Leiterplatte, auf der elektrisch leitfähige Strukturen ausgebildet sind. Die Geräteplatine 40 weist auf ihrer in Figur 2 dargestellten Geräteplatinenvorderseite 41 zwei Gerätekoppelelektroden 43, 44 auf, die in der gezeigten Ausführungsform kreisringförmig ausgebildet sind, die aber auch andere Formen aufweisen können.

Die Gerätekoppelelektroden 43, 44 sind über durch die Geräteplatine 40 hindurchführende elektrische Leiter 45, 46 mit einem elektrischen Geräteanschluss 47 auf der Geräteplatinenrückseite 42 verbunden.

Ferner weist die Geräteplatine 40 zwei Magnetelemente 51, 52 auf, die über die Geräteplatinenvorderseite 41 zugänglich sind. In anderen Ausführungsformen der Erfindung kann/können auch nur ein Magnetelement oder mehr als zwei Magnetelemente 51, 52 auf der Geräteplatinenvorderseite 41 ausgebildet sein.

Auf das Ansteuer- und Auslesegerät 4 ist eine Kartusche 2, die auch als Cartridge bezeichnet werden kann, aufgelegt. Das Ansteuer- und Auslesegerät 4 ist für einen dauerhaften Einsatz bestimmt, während die Kartusche 2 für eine einmalige Benutzung, d. h. als Wegwerfelement, konzipiert ist. Zwischen dem Ansteuer- und Auslesegerät 4 und der Kartusche 2 ist eine dielektrische Schutzmembran 8, wie beispielsweise ein Kapton-Tape, angeordnet.

Die Kartusche 2 weist ein SAW-Sensorbauteil 3 auf. In der gezeigten Ausführungsform weist das SAW-Sensorbauteil 3 eine Trägerplatine 20 und einen Sensorchip 30 mit wenigstens einem darauf befindlichen SAW-Sensor 33, vorzugsweise mehreren SAW-Sensoren 33, 34, 35, auf. In anderen, nicht gezeigten Ausführungsformen der Erfindung kann das SAW-Sensorbauteil 3 auch nur ein einziges Substrat aufweisen, welche die nachfolgend beschriebenen Elemente der Trägerplatine 20 und des Sensorchips 30 auf diesem Substrat vereint.

Die Trägerplatine 20 weist auf ihrer Trägerplatinenrückseite 27 rückseitige Kartuschenkoppelelektroden 23, 24 auf, die den Gerätekoppelelektroden 43, 44 gegenüberliegen. In der gezeigten Ausführungsform weisen die Gerätekoppelelektroden 43, 44 einen größeren Durchmesser als die rückseitige Kartuschenkoppelelektroden 23, 24 auf. Die Gerätekoppelelektroden 43, 44 und die auf einer Kartuschenrückseite der Kartusche 2 ausgebildeten rückseitigen Kartuschenkoppelelektroden 23, 24 können konzentrisch zueinander ausgebildet sein, müssen es aber nicht.

Zwischen den rückseitigen Kartuschenkoppelelektroden 23, 24 und den Gerätekoppelelektroden 43, 44 befindet sich lediglich die dielektrische Schutzmembran 8. Da das Ansteuer- und Auslesegerät 4 regelmäßig desinfiziert werden muss, kann durch die dielektrische Schutzmembran 8 ein vorteilhafter Schutz vor Desinfektionsmittel, aber auch vor Schmutz und generell vor Feuchtigkeit bereitgestellt werden. Die rückseitigen Kartuschenkoppelelektroden 23, 24 und die Gerätekoppelelektroden 43, 44 sind nicht über elektrische Leiter, sondern kapazitiv gekoppelt.

Auf einer Trägerplatinenvorderseite 28 der Trägerplatine 20 sind vorderseitige Kartuschenkoppelelektroden 25, 26, die über durch die Trägerplatine 20 hindurchführende elektrische Leiter 48, 49 mit den rückseitigen Kartuschenkoppelelektroden 23, 24 elektrisch leitend verbunden sind.

In der gezeigten Ausführungsform ist die Trägerplatine 20 eine Leiterplatte aus elektrisch nicht leitendem Material, auf der elektrisch leitende Strukturen ausgebildet sind. Die Trägerplatine 20 dient dazu, eine kapazitive Kopplung zwischen dem Sensorchip 30 der Kartusche 2 und dem Ansteuer- und Auslesegerät 4 herzustellen. Ferner hat die Trägerplatine 20 eine Trägerfunktion, indem sie den Sensorchip 30 trägt. Auf der Trägerplatine 20 können ferner Anpass-Bauelemente, wie Spulen und/oder Kondensatoren, zur Leistungsanpassung vorgesehen sein.

Die Trägerplatine 20 kann zudem Markierungen aufweisen, die zur Platzierung des Sensorchips 30 auf der Trägerplatine 20 genutzt werden können.

An der Trägerplatine 20 können die elektrischen Verbindungen zwischen den elektrischen Kontakten bzw. Elektroden auf der Trägerplatinenvorderseite 28 und der Trägerplatinenrückseite 27 beliebig gestaltet sein. Dies schafft mechanische und elektrische Freiheiten.

Der Sensorchip 30 besteht aus piezoelektrischem Material. Der Sensorchip 30 weist auf seiner Sensorchipvorderseite 37 den wenigstens einen SAW-Sensor 33 auf. Der wenigstens eine SAW-Sensor 33 wird mittels ebenfalls auf der Sensorchipvorderseite 37 befindlicher Sensorelektroden 31, 32 betrieben.

Die Sensorelektroden 31, 32 sind kapazitiv mit den vorderseitigen Kartuschenkoppelelektroden 25, 26 gekoppelt. Dabei bildet das piezoelektrische Material des Sensorchips 30 ein Dielektrikum dieser kapazitiven Koppelanaordnung.

Typischerweise ist der Sensorchip 30 auf die Trägerplatine 20 geklebt. Dann bildet der verwendete Kleber einen Teil des oben genannten Dielektrikums.

Somit sind die Sensorelektroden 31, 32 über die vorderseitigen Kartuschenkoppelelektroden 25, 26, die rückseitigen Kartuschenkoppelelektroden 23, 24 und die Gerätekoppelektroden 43, 44 mit dem Geräteanschluss 47 des Ansteuer- und Auslesegerätes 4 verbunden, sodass der wenigstens eine SAW-Sensor 33 elektrisch kontaktiert und dessen Signale ausgelesen werden können.

Oberhalb des wenigstens einen SAW-Sensors 33 ist in der Kartusche 2 ein Fluidbecken 70 ausgebildet. Das Fluidbecken 70 ist seitlich durch einen Fluidrahmen 7 begrenzt.

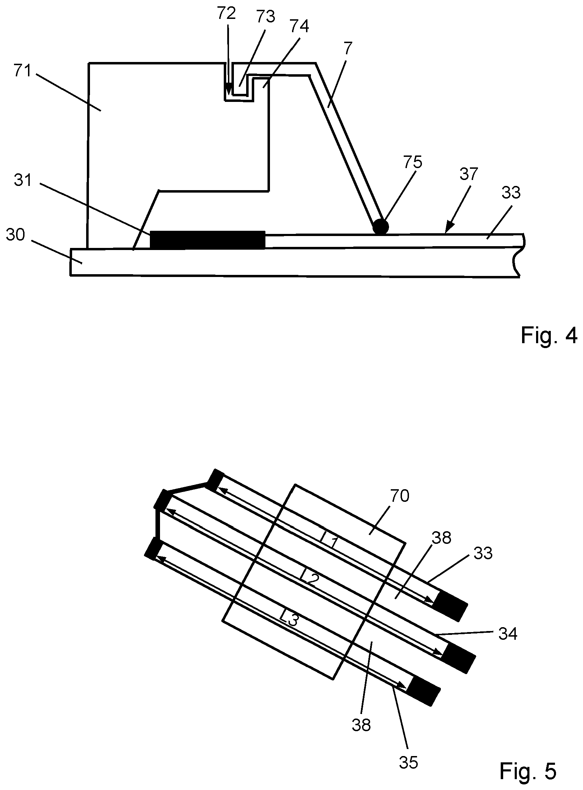

Der Fluidrahmen 7 kann beispielsweise, wie es in Figur 4 schematisch dargestellt ist, durch schräge Wände ausgebildet sein, die auf dem Sensorchip 30, oberhalb des wenigstens einen SAW-Sensors 33 einen Trichter ausbilden. Dabei können die schrägen Wände, wie in Figur 4 zu sehen, in Form von Hebeln ausgebildet sein, die einerseits in einer Nut 72 einer das Fluidbecken 70 umgebenden Kappe 71 eingehängt sind und andererseits auf dem Sensorchip 30 aufliegen, gegen den sie mittels einer Dichtung 75 abgedichtet sind. Die Dichtung 75 kann beispielsweise eine Klebewulst sein.

In der gezeigten Ausführungsform ist die Kappe 71 als Kunststoffspritzteil ausgebildet.

Die Kappe 71 deckt zusammen mit dem Fluidrahmen 7 die Sensorelektroden 31, 32 und Reflektoren des wenigstens einen SAW-Sensors 33 ab.

In das Fluidbecken 70 kann ein zu detektierendes Fluid gegeben werden. Die Größe des Fluidbeckens 70 definiert das analysierbare Fluidvolumen. Moleküle eines solchen Fluids können sich an die Oberfläche des wenigstens einen SAW-Sensors 33 anbinden, wodurch sich dessen Oberflächenwellenleitungseigenschaften ändern können, wodurch das entsprechende Fluid detektiert werden kann.

Das Fluidbecken 70 ist, solange die Kartusche 2 nicht in Gebrauch ist, durch eine Deckfolie 9 abgedeckt. Die Deckfolie 9 ist abziehbar.

In der gezeigten Ausführungsform ist auf dem Sensorchip 30 wenigstens ein RFID-Chip 10 angeordnet. Der RFID-Chip 10 ist auch kapazitiv über den Sensorchip 30 mit Kartuschenkoppelelektroden der Trägerplatine 2 gekoppelt und über diese wiederum kapazitiv mit Gerätekoppelelektroden der Geräteplatine 40 gekoppelt. Mit dem RFID-Chip 10 kann die Kartusche 2 und die darin durchgeführte Fluidprobenbestimmung eineindeutig bestimmt und damit erfassten Messwerten zugeordnet werden. Der RFID-Chip 10 kann in anderen Ausführungsformen der Erfindung auch auf der Trägerplatine 20 angeordnet sein.

Vorzugsweise ist der RFID-Chip 10 nicht ein auf SAW- sondern auf Halbleiterbasis aufgebauter RFID-Chip. In dem RFID-Chip 10 kann beispielsweise festgehalten werden, was für ein Test aktuell durch das SAW-Sensormodul 1 durchgeführt wird. Aus dem RFID-Chip 10 kann auch ausgelesen werden, ob das SAW-Sensormodul 1 bereits benutzt ist. Ferner können Chargennummer, Haltbarkeitsdaten usw. in dem RFID-Chip 10 gespeichert sein.

In der gezeigten Ausführungsform sind auf dem Sensorchip 30 drei SAW-Sensoren 33, 34, 35 ausgebildet. Die SAW-Sensoren 33, 34, 35 weisen, wie es in Figur 5 schematisch gezeigt ist, unterschiedliche Laufstrecken L1, L2, L3 auf. So können die Signale der SAW-Sensoren 33, 34, 35 gut voneinander unterschieden werden.

In der gezeigten Ausführungsform sind die SAW-Sensoren 33, 34, 35 300 MHz-SAW-Sensoren, können aber auch auf einer anderen Frequenz basierende SAW-Sensoren sein. Die SAW-Sensoren 33, 34, 35 sind streifenförmig und parallel zueinander ausgebildet. Über einem mittleren Bereich der SAW-Sensoren 33, 34, 35 befindet sich das Fluidbecken 70.

Zwischen den SAW-Sensoren 33, 34, 35 befinden sich fotolithografisch erzeugte Trennwände 38. Die Trennwände 38 schützen die einzelnen Bereiche der SAW-Sensoren 33, 34, 35, aber auch deren IDTs voneinander.

Ferner ist eine Abdeckung über nicht mit einem zu analysierenden Fluid in Berührung stehenden Bereichen des Sensorchips 30 ausgebildet. Die Abdeckung ist durch fotolithografische Schichtstrukturierung ausgebildet.

In der gezeigten Ausführungsform sind die SAW-Sensoren 33, 34, 35 in Serie verschaltet und nutzen zur Kontaktierung nur ein gemeinsames Paar kapazitiver Koppelelektroden. Dies muss jedoch nicht unbedingt sein, beispielsweise könnten die SAW-Sensoren 33, 34, 35 über einen Multiplexer nacheinander angesteuert und ausgelesen werden. Auch eine Parallelschaltung der einzelnen SAW-Sensoren 33, 34, 35 ist möglich.

In dem in Figur 5 dargestellten Ausführungsbeispiel bildet der SAW-Sensor 33 einen Probenkanal, also den eigentlichen Messkanal, der SAW-Sensor 34 einen Kompensationskanal zur Kompensation von Temperatureffekten und der SAW-Sensor 35 einen Referenzkanal aus, weist also keine selektive Rezeptorschicht auf.

In anderen Ausführungsformen der vorliegenden Erfindung können die SAW-Sensoren 33, 34, 35 auch zur Messung unterschiedlicher Analyte eingesetzt werden.

Durch die Kartusche 2 ist ein metallisches oder magnetisches Ausrichtungselement 6 geführt, das in dem gezeigten Ausführungsbeispiel aus einem metallischen Draht, wie einem Stahldraht, ausgebildet ist. Das wenigstens eine Ausrichtungselement 6 ist vorteilhafterweise durch vorgefertigte Bohrungen in der Kartusche 2, beispielsweise in Ecken der Kartusche 2, hindurchgeführt. Anstelle des Stahldrahtes kann auch ein Magnetfeldjoch als Ausrichtungselement 6 verwendet werden.

Die Enden des Ausrichtungselementes 6 enden an der Trägerplatinenrückseite 27, den Magnetelementen 51, 52 gegenüber. Durch die Wechselwirkung zwischen den Enden des Ausrichtungselementes 6 und den Magnetelementen 51, 52 richtet sich die Kartusche 2 automatisch auf der Geräteplatine 40 aus, wenn sie auf die Geräteplatine 40 aufgelegt wird. Durch diese automatische Ausrichtung liegen die Kartuschenkoppelelektroden 23, 24 automatisch auf den Gerätekoppelelektroden 43, 44.

## Patentansprüche

1. SAW-Sensormodul (1), das eine Kartusche (2) mit einem Sensorchip (30) aus piezoelektrischem Material und wenigstens einem darauf ausgebildeten SAW-Sensor (33, 34, 35) und wenigstens ein Ansteuer- und Auslesegerät (4) für den wenigstens einen SAW-Sensor (33, 34, 35) aufweist, **dadurch gekennzeichnet, dass** das Ansteuer- und Auslesegerät (4) eine Geräteplatine (40) aufweist, auf deren Geräteplatinenvorderseite (41) Gerätekoppelelektroden (43, 44) ausgebildet sind, die mittels durch die Geräteplatine (40) durchführender elektrischer Leiter (45, 46) mit einem auf der Geräteplatine (40) ausgebildeten Geräteanschluss (47) verbunden sind, und die Kartusche (2) Kartuschenkoppelelektroden (23, 24; 25, 26) aufweist, die einerseits mit den Gerätekoppelelektroden (43, 44) und andererseits mit Sensorelektroden (31, 32) des wenigstens einen SAW-Sensors (33, 34, 35) jeweils kapazitiv gekoppelt sind, wobei auf der Geräteplatine (40) wenigstens ein Magnetelement (51, 52) ausgebildet ist, und die Kartusche (2) wenigstens ein sich an dem wenigstens einen Magnetelement (51, 52) ausrichtendes, metallisches und/oder magnetisches Ausrichtungselement (6) aufweist.

2. SAW-Sensormodul nach Anspruch 1, **dadurch gekennzeichnet, dass** die Kartusche (2) eine zwischen dem Sensorchip (30) und der Geräteplatine (40) liegende Trägerplatine (20) aufweist, auf der die Kartuschenkoppelelektroden (23, 24; 25, 26) ausgebildet sind.

3. SAW-Sensormodul nach einem der vorhergehenden Ansprüche, **dadurch gekennzeichnet, dass** auf dem SAW-Sensorbauteil (3) ein Fluidrahmen (7) aufgebaut ist, der ein Fluidbecken (70) umschließt, und auf dem Sensorchip (30) um den Fluidrahmen (7) eine Kappe (71) ausgebildet ist, wobei die Kappe (71) und der Fluidrahmen (7) die Sensorelektroden (31, 32) und Reflektoren des wenigstens einen SAW-Sensors (33, 34, 35) abdecken.

4. SAW-Sensormodul nach Anspruch 3, **dadurch gekennzeichnet, dass** der Fluidrahmen (7) eine einerseits in einer an der Kappe (71) ausgebildeten Nut (72) eingehängte und andererseits auf eine Sensorchipvorderseite (37) des Sensorchips (30) drückende und dort abgedichtete Hebelstruktur ist.

5. SAW-Sensormodul nach Anspruch 3 oder 4, **dadurch gekennzeichnet, dass** der Fluidrahmen (7) einen schräge Wände aufweisenden Trichter auf dem wenigstens einen SAW-Sensor (33, 34, 35) ausbildet oder auf den Fluidrahmen (7) ein solcher Trichter aufgesetzt ist.

6. SAW-Sensormodul nach einem der Ansprüche 3 bis 5, **dadurch gekennzeichnet, dass** die Kappe (71) ein Kunststoffspritzteil ist, durch das das wenigstens eine Ausrichtungselement (6) verläuft.

7. SAW-Sensormodul nach einem der Ansprüche 3 bis 6, **dadurch gekennzeichnet, dass** über den Fluidrahmen (7) eine Deckfolie (9) laminiert ist.

8. SAW-Sensormodul nach einem der vorhergehenden Ansprüche, **dadurch gekennzeichnet, dass** die Kartusche (2) mehrere streifenförmige, parallel zueinander angeordnete SAW-Sensoren (33, 34, 35) aufweist.

9. SAW-Sensormodul nach Anspruch 8, **dadurch gekennzeichnet, dass** zwischen den SAW-Sensoren (33, 34, 35) Trennwände (38) ausgebildet sind.

10. SAW-Sensormodul nach Anspruch 8 oder 9, **dadurch gekennzeichnet, dass** wenigstens zwei der SAW-Sensoren (33, 34, 35) unterschiedliche Laufstrecken (L1, L2, L3) aufweisen.

11. SAW-Sensormodul nach einem der Ansprüche 8 bis 10, **dadurch gekennzeichnet, dass** jedem der SAW-Sensoren (33, 34, 35) ein separater kapazitiver Anschluss zugeordnet ist.

12. SAW-Sensormodul nach einem der vorhergehenden Ansprüche, **dadurch gekennzeichnet, dass** auf dem Sensorchip (30) und/oder der Trägerplatine (20) wenigstens ein RFID-Chip (10) ausgebildet ist, der über wenigstens eine kapazitive Kopplung mit dem Geräteanschluss (47) verbunden ist.

13. SAW-Sensormodul nach einem der vorhergehenden Ansprüche, **dadurch gekennzeichnet, dass** zwischen der Kartusche (2) und dem Ansteuer- und Auslesegerät (4) eine dielektrische Schutzmembran (8) angeordnet ist.

## Claims

1. SAW sensor module (1) comprising a cartridge (2) with a sensor chip (30) of piezoelectric material and at least one SAW sensor (33, 34, 35) formed thereon and at least one control and reading device (4) for the at least one SAW sensor (33, 34, 35), **characterized in that** the control and reading device (4) comprises a device board (40), on whose device board front side (41) device coupling electrodes (43, 44) are formed, which are connected to a device connection (47) formed on the device board (40) by means of electrical conductors (45, 46) passing through the device board (40), and the cartridge (2) comprises cartridge coupling electrodes (23, 24; 25, 26), which are each capacitively coupled to the device coupling electrodes (43, 44) on the one hand and on the other hand to sensor electrodes (31, 32) of the at least one SAW sensor (33, 34, 35), wherein at least one magnetic element (51, 52) is formed on the device board (40), and the cartridge (2) comprises at least one metallic and/or magnetic alignment element (6) aligning with the at least one magnetic element (51, 52).

2. SAW sensor module according to claim 1, **characterized in that** the cartridge (2) comprises a carrier board (20) located between the sensor chip (30) and the device board (40), on which carrier board (20) the cartridge coupling electrodes (23, 24; 25, 26) are formed.

3. SAW sensor module according to one of the preceding claims, **characterized in that** a fluid frame (7) enclosing a fluid basin (70) is constructed on a SAW sensor component (3), and a cap (71) is formed on the sensor chip (30) around the fluid frame (7), wherein the cap (71) and the fluid frame (7) cover the sensor electrodes (31, 32) and reflectors of the at least one SAW sensor (33, 34, 35).

4. SAW sensor module according to claim 3, **characterized in that** the fluid frame (7) is a lever structure which is suspended in a groove (72) formed on the cap (71) on the one hand and on the other hand presses on a sensor chip front side (37) of the sensor chip (30) and is sealed there.

5. SAW sensor module according to claim 3 or 4, **characterized in that** the fluid frame (7) forms a funnel comprising oblique walls on the at least one SAW sensor (33, 34, 35) or such a funnel is placed on the fluid frame (7).

6. SAW sensor module according to one of claims 3 to 5, **characterized in that** the cap (71) is a plastic injection-molded part through which the at least one alignment element (6) runs.

7. SAW sensor module according to one of claims 3 to 6, **characterized in that** a cover film (9) is laminated over the fluid frame (7).

8. SAW sensor module according to one of the preceding claims, **characterized in that** the cartridge (2) comprises a plurality of strip-shaped SAW sensors (33, 34, 35) arranged parallel to one another.

9. SAW sensor module according to claim 8, **characterized in that** between the SAW sensors (33, 34, 35), partition walls (38) are formed.

10. SAW sensor module according to claim 8 or 9, **characterized in that** at least two of the SAW sensors (33, 34, 35) have different propagation paths (L1, L2, L3).

11. SAW sensor module according to one of claims 8 to 10, **characterized in that** a separate capacitive connection is associated to each of the SAW sensors (33, 34, 35).

12. SAW sensor module according to one of the preceding claims, **characterized in that** at least one RFID chip (10) is formed on the sensor chip (30) and/or on the carrier board (20), said RFID chip being connected to the device connection (47) via at least one capacitive coupling.

13. SAW sensor module according to one of the preceding claims, **characterized in that** a dielectric protective membrane (8) is arranged between the cartridge (2) and the control and reading device (4).

## Revendications

1. Module de capteur SAW (1) comprenant une cartouche (2) dotée d'une puce de capteur (30) en matériau piézoélectrique et d'au moins un capteur SAW (33, 34, 35) formé sur celle-ci, et au moins un dispositif de commande et de lecture (4) pour l'au moins un capteur SAW (33, 34, 35), **caractérisé en ce que** le dispositif de commande et de lecture (4) comprend une carte de dispositif (40) ayant sur sont face avant de carte de dispositif (41) des électrodes de couplage de dispositif (43, 44) reliées par des conducteurs électriques (45, 46) traversant la carte de dispositif (40) à une connexion de dispositif (47) formée sur la carte de dispositif (40), et la cartouche (2) comprend des électrodes de couplage de cartouche (23, 24; 25, 26) connectées d'une part aux électrodes de couplage de cartouche (43, 44) et d'autre part aux électrodes de capteur (31, 32) de l'au mions un capteur SAW (33, 34, 35) et chacun couplés de manière capacitive, au moins un élément magnétique (51, 52) étant formé sur la carte de dispositif (40), et la cartouche (2) comportant au moins un élément d'alignement métallique et/ou magnétique (6) qui est aligné avec l'au moins un élément magnétique (51, 52).

2. Module de capteur SAW selon la revendication 1, **caractérisé en ce que** la cartouche (2) comporte une carte de support (20) située entre la puce de capteur (30) et la carte de dispositif (40), sur quelle carte de support (20) les électrodes de couplage de cartouche (23, 24; 25, 26) sont formées.

3. Module de capteur SAW selon l'une des revendications précédentes, **caractérisé en ce que** un cadre de fluide (7) est construit sur le composant de capteur SAW (3), quel cadre de fluide (7) entoure un bassin de fluide (70), et un capuchon (71) est formé sur la puce de capteur (30) autour du cadre de fluide (7), le capuchon (71) et le cadre de fluide (7) recouvrant les électrodes de capteur (31, 32) et des réflecteurs de l'au moins un capteur SAW (33, 34, 35).

4. Module de capteur SAW selon la revendication 3, **caractérisé en ce que** le cadre fluide (7) est une structure de levier qui, d'une part, est suspendue dans une rainure (72) formée sur le capuchon (71) et, d'autre part, appuie sur une face avant de puce de capteur (37) de la puce de capteur (30) et y est scellée.

5. Module de capteur SAW selon la revendication 3 ou 4, **caractérisé en ce que** le cadre de fluide (7) forme un entonnoir avec des parois inclinées sur l'au moins un capteur SAW (33, 34, 35) ou un tel entonnoir est placé sur le cadre de fluide (7).

6. Module de capteur SAW selon l'une des revendications 3 à 5, **caractérisé en ce que** le capuchon (71) est une pièce moulée par injection en plastique à travers laquelle s'étend au moins un élément d'alignement (6).

7. Module de capteur selon l'une des revendications 3 à 6, **caractérisé en ce que** un film de recouvrement (9) est laminé sur le cadre fluide (7).

8. Module de capteur SAW selon l'une des revendications précédentes, **caractérisé en ce que** la cartouche (2) comporte une pluralité de capteurs SAW (33, 34, 35) en forme de bande disposés parallèlement les uns aux autres.

9. Module de capteur SAW selon la revendication 8, **caractérisé en ce que** des parois de séparation (38) sont formées entre les capteurs SAW (33, 34, 35).

10. Module de capteur SAW selon la revendication 8 ou 9, **caractérisé en ce que** au moins deux des capteurs SAW (33, 34, 35) ont des distances de déplacement différentes (L1, L2, L3).

11. Module de capteur SAW selon l'une des revendications 8 à 10, **caractérisé en ce que** à chacun des capteurs SAW (33, 34, 35) une connexion capacitive distincte est attribuée.

12. Module de capteur SAW selon l'une des revendications précédentes, **caractérisé en ce que** au moins une puce RFID (10) est formée sur la puce de capteur (30) et/ou sur la carte de support (20), quelle puce RFID (7) est connectée à la connexion de dispositif (47) par l'intermédiaire d'au moins un couplage capacitif.

13. Module de capteur SAW selon l'une des revendications précédentes, **caractérisé en ce que** une membrane de protection diélectrique (8) est disposée entre la cartouche (2) et le dispositif de commande et de lecture (4).
